(19) Europäisches Patentamt / European Patent Office / Office européen des brevets

(11) **EP 3 466 727 A1**

(12) **EUROPEAN PATENT APPLICATION**
published in accordance with Art. 153(4) EPC

(43) Date of publication:
**10.04.2019 Bulletin 2019/15**

(21) Application number: **17806409.3**

(22) Date of filing: **19.05.2017**

(51) Int Cl.:
**B60C 19/08** (2006.01)　　**B60C 9/04** (2006.01)

(86) International application number:
**PCT/JP2017/018807**

(87) International publication number:
**WO 2017/208852 (07.12.2017 Gazette 2017/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.05.2016　JP 2016109545**

(71) Applicant: **Bridgestone Corporation
Tokyo 104-8340 (JP)**

(72) Inventors:
- **YANAGIOKA, Masaki
  Tokyo 104-8340 (JP)**
- **YONEMOTO, Makiko
  Tokyo 104-8340 (JP)**

(74) Representative: **Lang, Johannes
Bardehle Pagenberg Partnerschaft mbB
Patentanwälte, Rechtsanwälte
Prinzregentenplatz 7
81675 München (DE)**

(54) **PNEUMATIC TIRE**

(57)　Provided is a pneumatic tire which prevents accumulation of static electricity during travelling, which inhibits the tire from rising in an electric resistance with the passage of time, and which is reduced in a rolling resistance of the tire and excellent in durability thereof. In the pneumatic tire described above, a conductive rubber is arranged for a ply coating rubber of one surface, and a non-conductive rubber is arranged for the ply coating rubber of the other surface; assuming that the respective thicknesses thereof are T1 and T2, a carcass ply has a ply in which T1/T2 satisfies $0.2 \leq T1/T2 \leq 0.9$; and the conductive ply coating rubber is arranged at a tread side, and the non-conductive ply coating rubber is arranged at an inner liner side.

*Fig. 1*

## Description

Technical Field

The present invention relates to a pneumatic tire which prevents accumulation of static electricity during travelling, which inhibits the tire from rising in an electric resistance with the passage of time, and which is reduced in a rolling resistance of the tire and excellent in durability thereof.

Background Art

In recent years, saving energy is socially required, and fuel efficient tires have been promoted to be developed. A reduction in a weight of a tire, an elongation of a life thereof and a reduction in a rolling resistance of a tire (hereinafter referred to as a low loss property), and the like have been investigated as one of measures therefor.

A ply coating rubber has so far been investigated to be improved in a low loss property to a large extent in order to improve a low loss property of a tire, and it has been found that such concerns that the rubber is enhanced in an electric resistance and that the whole rubber is reduced in conductivity to a large extent to induce spark of the car and radio noise are involved therein.

Known as the pneumatic tire for solving problems described above is, for example, a pneumatic tire (refer to, for example, patent document 1) comprising: a non-conductive tread whose outer surface is a tread surface; a conductive undertread which is positioned in an inside of the tread in a radial direction; a conductive penetration part which penetrates through the tread described above and which is exposed on the tread surface at one end thereof and comes to the undertread described above at the other end; a pair of non-conductive side walls which each extend approximately inward in a radial direction from the end of the tread; a pair of conductive clinches which each extend approximately inward in a radial direction from the ends of the side walls; a pair of beads which are positioned insider than the clinch in an axial direction; a carcass bridged between one bead and the other bead along the insides of the tread and the side wall; and a conductive reinforcing layer which is laminated on the carcass described above in an inside of the undertread in a radial direction, wherein the carcass described above has a lot of cords aligned in parallel and a conductive topping rubber, and the carcass has an electric resistance Rc of less than $1.0 \times 10^8 \, \Omega$ represented by a specific equation.

However, a conductive rubber and a non-conductive rubber are used separately for different members in the pneumatic tire shown in patent document 1 described above. Therefore, a problem such as complicated structure is involved. Also, the technical concept that different kinds of rubbers are used on upper and lower faces of a ply coating rubber is not shown therein, and differs from the technical concept of the present invention.

Conventional Art Documents

Patent documents

Patent document 1: Japanese Patent Application Laid-Open No. 2013-86568 (claims, FIG. 1 and others)

Disclosure of the Invention

In light of the problems on the conventional art described above, the present invention intends to solve the problems, and an object thereof is to provide a pneumatic tire in which even when different kinds of rubbers are used on upper and lower surfaces of a ply coating rubber in the pneumatic tire, a stress applied to the tire, and a direction thereof are not different on the upper and lower surfaces of the ply to bring about no distortion, so that separation and a distortion of a force applied to the adjacent members can be prevented, which is therefore excellent in durability, which prevents accumulation of static electricity during travelling, which inhibit the tire from rising in an electric resistance with the passage of time, and which is excellent in a reduction in a rolling resistance of the tire.

Intense investigations repeated by the present inventors in order to solve the conventional problems described above and the like have resulted in finding that a pneumatic tire which meets the object described above is obtained by a pneumatic tire comprising a carcass composed of at least one carcass ply as a skeleton extending in a toroidal form across a pair of beads, at least one belt layer arranged at an outside of a crown part of the carcass in a tire radial direction, a tread part forming a grounding surface part which is provided at an outside of the belt layer described above in a tire radial direction, and an inner liner layer arranged at an inside of the carcass ply in a tire radial direction, wherein a conductive rubber is arranged for a ply coating rubber of one surface, and a non-conductive rubber is arranged for the ply coating rubber of the other surface; assuming that the respective thicknesses thereof are T1 and T2, the carcass ply has a ply having a specific range of T1/T2; and the conductive ply coating rubber is arranged at a tread side, and the non-conductive ply coating rubber is arranged at an inner liner side.

That is, the pneumatic tire of the present invention comprises a carcass composed of at least one carcass ply as a skeleton extending in a toroidal form across a pair of beads, at least one belt layer arranged at an outside of a crown part of the carcass in a tire radial direction, a tread part forming a grounding surface part which is provided at an outside of the belt layer described above in a tire radial direction, and an inner liner layer arranged at an inside of the carcass ply in a tire radial direction, wherein a conductive rubber is arranged for a ply coating rubber of one surface, and a non-conductive rubber is arranged for the ply coating rubber of the other surface; assuming that the respective thicknesses thereof are T1 and T2, the carcass ply has a ply in which T1/T2 is $0.2 \leq T1/T2 \leq 0.9$; and the conductive ply coating rubber is arranged at a tread side, and the non-conductive ply coating rubber is arranged at an inner liner side.

The conductive ply coating rubber described above contains preferably a conductive material.

The non-conductive ply coating rubber described above contains preferably carbon black having a nitrogen adsorption specific surface area ($N_2SA$) of 30 to 40 $m^2/g$.

Assuming that the loss tangents of the ply coating rubbers each described above at 60°C are tan D1 and tan D2 respectively, the loss tangents satisfy preferably tan D1$\geq$tan D2.

(T1 $\times$ tan D1)/(T2 $\times$ tan D2) in the respective thicknesses T1 and T2 and the loss tangents tan D1 and tan D2 of the ply coating rubbers each described above satisfies preferably $0.2 \leq$(T1 $\times$ tan D1)/(T2 $\times$ tan D2)$\leq 1.2$, more preferably $0.4 \leq$(T1 $\times$ tan D1)/(T2 $\times$ tan D2)$\leq 0.9$.

Assuming that the storage elastic moduli of the ply coating rubbers each described above at 60°C are E1 and E2 respectively, E1/E2 satisfies preferably $1.0 \leq$E1/E2$\leq 1.5$, more preferably $1.0 \leq$E1/E2$\leq 1.2$.

The sum T1 + T2 of the respective thicknesses T1 and T2 of the ply coating rubbers satisfies preferably $0.9 \leq$T1 + T2$\leq 1.4$.

The kinds of a cross-linking agent and a vulcanization accelerator contained in the conductive rubber and the non-conductive rubber are preferably the same.

Assuming that the 10% vulcanization times (T0.1) of the conductive rubber and the non-conductive rubber are s1 and s2 respectively, s1/s2 satisfies preferably $0.9 \leq$s1/s2$\leq 1.1$.

A method for producing the ply according to the present invention comprises a step of arranging a conductive rubber containing a conductive material on the ply coating rubber of one surface and a non-conductive rubber containing carbon black having a nitrogen adsorption specific surface area ($N_2SA$) of 30 to 40 $m^2/g$ on the ply coating rubber of the other surface to coat the upper and lower surfaces at the same time.

In the method for producing the ply described above, the kinds of a cross-linking agent and a vulcanization accelerator contained in the conductive rubber and the non-conductive rubber are preferably the same.

A method for producing the pneumatic tire according to the present invention comprises a step of using the ply produced by the method for producing the ply described above to arrange the conductive ply coating rubber at a tread side of the ply, and the non-conductive ply coating rubber at an inner liner side of the ply.

According to the present invention, provided is a pneumatic tire in which even when different kinds of rubbers are used on upper and lower surfaces of a ply coating rubber in the pneumatic tire, a stress applied to the tire and a direction thereof during the travelling of the car are not different on the upper and lower surfaces of the ply to bring about no distortion, so that separation and a distortion of a force applied to the adjacent members can be prevented, which is therefore excellent in a durability and prevents accumulation of static electricity during travelling, which inhibits the tire from rising in an electric resistance with the passage of time and which is excellent in a reduction in a rolling resistance of the tire.

Assuming that the storage elastic moduli of the ply coating rubbers each described above at 60°C are E1 and E2 respectively, E1/E2 is controlled to a range of $1.0 \leq$E1/E2$\leq 1.5$, whereby provided is a pneumatic tire which can further prevent separation and further prevent a distortion of a force applied to the adjacent members and which is further enhanced in durability.

The sum T1 + T2 of the respective thicknesses T1 and T2 of the ply coating rubbers is set to $0.9 \leq$T1 + T2$\leq 1.4$, whereby a pneumatic tire which is prevented from increasing of a weight is provided.

The same kinds of the cross-linking agent and the vulcanization accelerator contained in the conductive rubber and the non-conductive rubber are used, whereby the vulcanization mode is equalized on the upper and lower surfaces of the ply, and therefore a pneumatic tire which is further enhanced in a separation preventing effect of the upper and lower contact surfaces is provided.

Assuming that the 10% vulcanization times (T0.1) of the conductive rubber and the non-conductive rubber are s1 and s2 respectively, s1/s2 is set to $0.9 \leq$s1/s2$\leq 1.1$, whereby a pneumatic tire which is equal in a scorch time on the upper and lower surfaces of the ply and which is easily produced and exerts less influences on the product properties is provided.

The method for producing the ply according to the present invention comprises a step of arranging a conductive rubber containing a conductive material on the ply coating rubber of one surface and a non-conductive rubber containing carbon black having a nitrogen adsorption specific surface area ($N_2SA$) of 30 to 40 $m^2/g$ on the ply coating rubber of the other surface to coat the upper and lower surfaces at the same time, and therefore a stress applied to the tire and a direction thereof during the travelling of the car are not different on the upper and lower surfaces of the ply to bring about no distortion, so that separation of the ply and a distortion of a force applied to the adjacent members can be prevented. Accordingly, provided is the method for producing the ply for the pneumatic tire which is excellent in durability of the ply and prevents accumulation of static electricity during travelling, which inhibit the tire from rising in an electric resistance with the passage of time, and which is excellent in a reduction in a rolling resistance of the tire, and the method for producing the ply for the pneumatic tire which can be produced by the same number of the steps as ever is provided.

In the method for producing the ply, the same kinds of the cross-linking agent and the vulcanization accelerator contained in the conductive rubber and the non-conductive rubber are used, whereby the method for producing the ply for the pneumatic tire which is equal in a scorch time on the upper and lower surfaces of the ply and which is easily produced and exerts less influences to the product properties is provided.

The method for producing the pneumatic tire according to the present invention is a producing method comprising a step of using the ply produced by the method described above to arrange the conductive ply coating rubber at a tread side and the non-conductive ply coating rubber at an inner liner side, so that the ply comprising different kinds of rubbers can be produced by the same number of the steps as ever, and provided is the method for producing the pneumatic tire which is excellent in durability and prevents accumulation of static electricity during travelling, which inhibits the tire from rising in an electric resistance with the passage of time, and which is excellent in a reduction in a rolling resistance of the tire.

BRIEF DESCRIPTION of THE DRAWINGS

[FIG. 1] A cross section of a left half of a pneumatic tire showing one example of the embodiments of the present invention

[FIG. 2] A schematic cross section of a ply coating rubber used for the pneumatic tire shown in FIG. 1

[FIG. 3] Schematic drawings (a) to (c) showing the respective structures of the end parts of the carcass ply

MODE FOR CARRYING OUT THE INVENTION

The embodiments of the present invention shall be explained in detail while referring to the drawings.

The pneumatic tire of the present invention comprises: a carcass composed of at least one carcass ply as a skeleton extending in a toroidal form across a pair of beads; at least one belt layer arranged at an outside of a crown part of the carcass in a tire radial direction; a tread part forming a grounding surface part which is provided at an outside of the belt layer described above in a tire radial direction; and an inner liner layer arranged at an inside of the carcass ply in a tire radial direction, wherein a conductive rubber is arranged for a ply coating rubber of one surface, and a non-conductive rubber is arranged for the ply coating rubber of the other surface; assuming that the respective thicknesses thereof are T1 and T2, the carcass ply has a ply in which T1/T2 is $0.2 \leq T1/T2 \leq 0.9$; and the conductive ply coating rubber is arranged at a tread side, and the non-conductive ply coating rubber is arranged at an inner liner side.

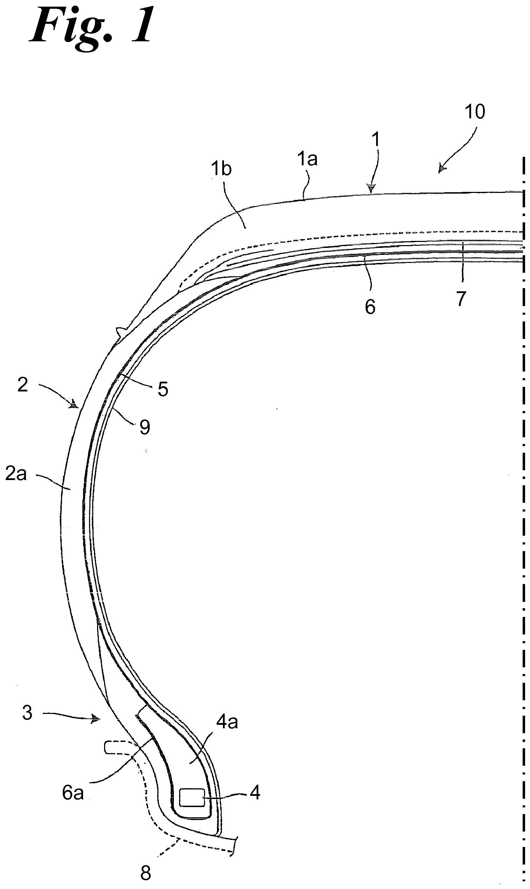

In the pneumatic tire according to the present invention, structures other than the ply coating rubber described above shall not specifically be restricted, and the structures of usual pneumatic tires can be used. The embodiments of the present invention shall be explained below with reference to, for example, the pneumatic tire shown in FIG.1.

The pneumatic tire 10 of the present embodiment comprises, as shown in FIG. 1, bead cores 4 buried and arranged in a pair of the respective bead parts 3, a main body part 5 extending in a toroidal form from a tread part 1 to the bead part 3 through a side wall part 2, at least one carcass ply 6 having a folding part 6a continuing to the main body part 5 and folding around the bead core 4, at least one belt layer 7 (three layers in the present case) positioned at an outer peripheral side of a crown part of the carcass ply 6 to coat a cord with the rubber, and a rim 8.

The tread part 1 includes a tread rubber 1a constituting a ground contact surface and a belt layer 7 arranged at an inside of the tread rubber 1a in a tire radial direction, and a tread cyclic body 1b which is brought into contact with the carcass ply 6 from an outside in a tire radial direction is provided in the tread part 1.

A side wall rubber 2a is arranged in the side wall part 2 at an outside of the carcass ply 6 in a tire radial direction.

The cyclic bead core 4 obtained by coating a convergent body of steel wires and the like is buried in the bead core part 3, and a bead filler 4a comprising a hard rubber is arranged at an outside of the bead core 4 in a tire radial direction.

The carcass ply 6 is molded in a toroidal form as a whole, and a structure in which the bead core 4 and the bead filler 4a are interposed between the main body part 5 and the folding part 6a is assumed. Also, an inner liner layer 9 for maintaining an inner pressure is provided at an inside of the carcass ply 6.

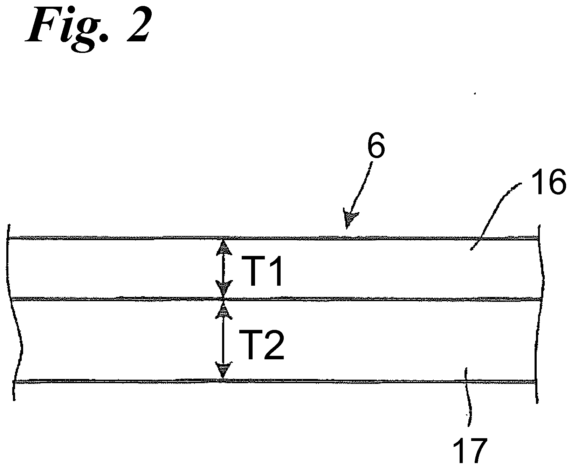

FIG. 2 is a schematic drawing of the carcass ply 6 shown in FIG. 1. In the present carcass ply 6, a conductive rubber is arranged for paralleled carcass cords (not illustrated) and a ply coating rubber 16 disposed at a tread side which is one surface side of the above carcass cord, and a non-conductive rubber is arranged for a ply coating rubber 17 disposed at an inner liner side which is the other surface. Assuming that a thickness of the conductive ply coating rubber 16 is T1 and that a thickness of the non-conductive ply coating rubber 17 is T2, the carcass ply has the ply coating rubbers having a ratio T1/T2 of 0.2≤T1/T2≤0.9.

The carcass cords described above are arranged in a direction approximately orthogonal to a tire peripheral direction, and organic fiber cords or steel cords can be used.

The rubber composition of the conductive ply coating rubber 16 used includes the rubber compositions containing conductive materials in the rubber component as the material rubber.

The conductive materials include, for example, conductive carbons such as carbon nanotube (CNT), rod-form or yarn-form conductive materials of rounding graphene sheets, vapor phase growth carbon fibers (VGCF), Ketjen blacks, and acetylene blacks. Also, commercial products thereof such as C100 (manufactured by Arkemaya Inc.) and NC7000 (manufactured by Nanocyl Corp.) can be used. Further, carbon blacks having a large nitrogen adsorption specific surface area such as SAF, ISAF, HAF, and FEF can be blended to thereby endow the rubber components with a conductivity.

The material rubber (rubber component) includes, for example, at least one of natural rubber (NR), styrene butadiene rubber (SBR), butadiene rubber (BR), isoprene rubber (IR), butyl rubber (IIR), halogenated butyl rubber, chloroprene rubber (CR), acrylonitrile butadiene rubber (NBR), and ethylene propylene diene ternary copolymer (EPDM) .

Carbon blacks such as SAF, ISAF, HAF, FEF, GPF, SRF, FT, and MT can be used for the conductive ply coating rubber described above. In particular, a content of the above carbon blacks is 30 to 50 parts by mass based on 100 parts by mass of the material rubber (rubber component).

The conductive ply coating rubber described above is further blended suitably with a vulcanizing agent, a vulcanization accelerator, oil, zinc white (zinc oxide), an antioxidant and the like. Also, a content of the conductive materials described above is varied according to the kinds of conductive materials and the tire, and the content is preferably 0.5 to 7 parts by mass based on 100 parts by mass of the material rubber (rubber component) in view of a heat generating property.

The conductive ply coating rubber described above has a low electric resistance, and the electric resistance is preferably, for example, $1 \times 10^{10}$ Ω·cm or less, more preferably $1 \times 10^{9}$ Ω·cm or less of a specific resistance value (volume specific resistance value).

The non-conductive ply coating rubber used contains preferably carbon black having a nitrogen adsorption specific surface area ($N_2SA$, measured based on JIS K 6217-2 : 2001) of 30 to 45 $m^2/g$, more preferably 30 to 40 $m^2/g$ in the rubber component as the material rubber in view of a low heat generating property. The carbon blacks such as FEF, GPF, and SRF having the physical property described above is capable of to use. A content of the carbon blacks described above is 30 to 50 parts by mass based on 100 parts by mass of the material rubber (rubber component).

The material rubber (rubber component) includes at least one of natural rubber (NR), diene base synthetic rubbers (SBR, BR, IR, IIR and the like) as is the case with the conductive ply coating rubber described above.

The non-conductive ply coating rubber described above is further blended suitably with a cross-linking agent, a vulcanization accelerator, oil, zinc white (zinc oxide), an antioxidant and the like.

The same kinds of the cross-linking agent and the vulcanization accelerator contained in the non-conductive ply coating rubber are preferably used as the cross-linking agent and the vulcanization accelerator contained in the conductive ply coating rubber described above in view of equalizing the vulcanization mode on the upper and lower surfaces of the ply, further improving a separation preventing effect on the upper and lower contact surfaces and making the scorch times the same to thereby facilitate handling in the production step.

The non-conductive ply coating rubber described above has a relatively high electric resistance, and the electric rsistance is preferably, for example, $1 \times 10^{13}$ Ω·cm or higher in terms of a specific resistance value (volume specific resistance value).

The carcass ply used in the present invention can be prepared through a step of arranging the conductive ply coating rubber having the blend composition described above on the ply coating rubber of one surface and the non-conductive ply coating rubber having the blend composition described above on the ply coating rubber of the other surface to coat the upper and lower surfaces at the same time with the conductive ply coating rubber, the non-conductive ply coating rubber and the carcass cords. In the method for producing the ply described above, involved is the advantage that even when using different kinds of the rubbers, the ply can be produced by the same number of the steps as ever.

In the present invention, a ratio T1/T2 of a thickness T1 (mm) of the conductive ply coating rubber 16 to a thickness T2 (mm) of the non-conductive ply coating rubber has to be 0.2≤T1/T2≤0.9, preferably 0.35≤T1/T2≤0.7.

If T1/T2 is less than 0.2, the thickness T1 of the conductive ply coating rubber 16 is too thin, and the conductivity is lowered, so that it is not preferable. On the other hand, if T1/T2 exceeds 0.9, the heat generating property is raised, so that it is not preferable.

Further, the sum T1 + T2 of the thicknesses T1 and T2 described above is set to preferably 0.9≤T1 + T2≤1.4, more preferably to 1.0≤T1 + T2≤1.2 in view of preventing an increase in a weight and maintaining an inner pressure.

Also, in order to further exert the effects of the present invention, the respective loss tangents (tan D1, tan D2), a ratio of the respective thicknesses (T1, T2) and the loss tangents (tan D1, tan D2), a ratio of the storage elastic moduli (E1, E2), and a ratio of the 10% vulcanization times (s1, s2) in the conductive and non-conductive ply coating rubbers described above are controlled preferably to the following ranges.

Assuming that the loss tangents of the ply coating rubbers each described above at 60°C are tan D1 and tan D2 respectively, the loss tangent of the conductive ply coating rubber is preferably equal to the loss tangent of the non-conductive ply coating rubber or more, that is, tan D1≥tan D2 in view of the low heat generating property.

Further, a ratio (T1 × tan D1)/(T2 × tan D2) in the respective thicknesses T1 and T2 and the loss tangents tan D1 and tan D2 of the ply coating rubbers each described above is preferably 0.2≤(T1 × tan D1)/(T2 × tan D2)≤1.2, more preferably 0.4≤(T1 × tan D1)/(T2 × tan D2)≤0.9 in terms of the low heat generating property and the distortion.

Also, assuming that the storage elastic moduli of the ply coating rubbers each described above at 60°C are E1 and E2 respectively, a ratio E1/E2 of a storage elastic modulus E1 of the conductive ply coating rubber and a storage elastic modulus E2 of the non-conductive ply coating rubber is preferably 1.0≤E1/E2≤1.5, particularly preferably 1.0≤E1/E2≤1.45 in terms of further improving durability (preventing separation and a distortion of a force applied to the adjacent members).

Also, assuming that the 10% vulcanization times (T0.1) of the conductive ply coating rubber and the non-conductive ply coating rubber in the ply coating rubber described above are s1 and s2 respectively, s1/s2 is preferably 0.9≤s1/s2≤1.1 in terms of equalizing the scorch time on the upper and lower surfaces of the ply, to make the producing easy and to decrease influences to the product properties.

The respective loss tangents (tan D1, tan D2), a ratio of the respective thicknesses (T1, T2) and the loss tangents (tan D1, tan D2), a ratio of the storage elastic moduli (E1, E2), and a ratio of the 10% vulcanization times (s1, s2) in the conductive and non-conductive ply coating rubbers described above can be set to the preferred respective ranges described above by suitably combining the respective components of the conductive ply coating rubber and the non-conductive ply coating rubber used and the amounts thereof and suitably setting the kinds of the blend components (chemicals).

The pneumatic tire of the present invention can be produced through a step of using the ply produced by the method described above to arrange the conductive ply coating rubber at a tread side and the non-conductive ply coating rubber at an inner liner side.

That is, a carcass ply is arranged on a tire molding machine together with the respective members such as a bead, a bead core, a tread, a side wall and a belt in addition to the ply described above so that the conductive ply coating rubber of the ply is turned to a tread side and that the non-conductive ply coating rubber is turned to an inner liner side, and the members are subjected to molding by a usual method to thereby prepare an green tire. The green tire is heated and pressurized in a vulcanizing device, whereby the intended pneumatic tire having the respective structures shown in, for example, FIG. 1 to FIG. 3 can be obtained. In the producing method described above, the ply comprising different kinds of rubbers can be produced by the same number of the steps as ever, and capable of being produced is the pneumatic tire which prevents accumulation of static electricity during travelling, which inhibits the tire from rising in an electric resistance with the passage of time, and which is excellent in a reduction in a rolling resistance and durability.

To describe the pneumatic tire of the embodiment shown in FIG. 1, FIG.2 and FIG. 3 (a) in detail, the pneumatic tire comprises: through a step of using the ply prepared by the method described above to arrange the conductive ply coating rubber at a tread side and the non-conductive ply coating rubber at an inner liner side; the bead cores 4 buried and arranged in a pair of the respective bead parts 3; the main body part 5 extending in a toroidal form from a tread part 1 to the bead part 3 through the side wall part 2; at least one carcass ply 6 having a folding part 6a continuing to the main body part 5 and folding around the bead core 4; and at least one belt layer 7 (three layers in the present case) positioned at an outer peripheral side of a crown part of the carcass ply 6 to coat a cord with the rubber.

In the carcass ply 6, the conductive rubber having the characteristic described above is arranged, as shown in FIG. 2, for the ply coating rubber 16 disposed at a tread side, and the non-conductive rubber having the property described above is arranged for the ply coating rubber 17 disposed at an inner liner side as the other side.

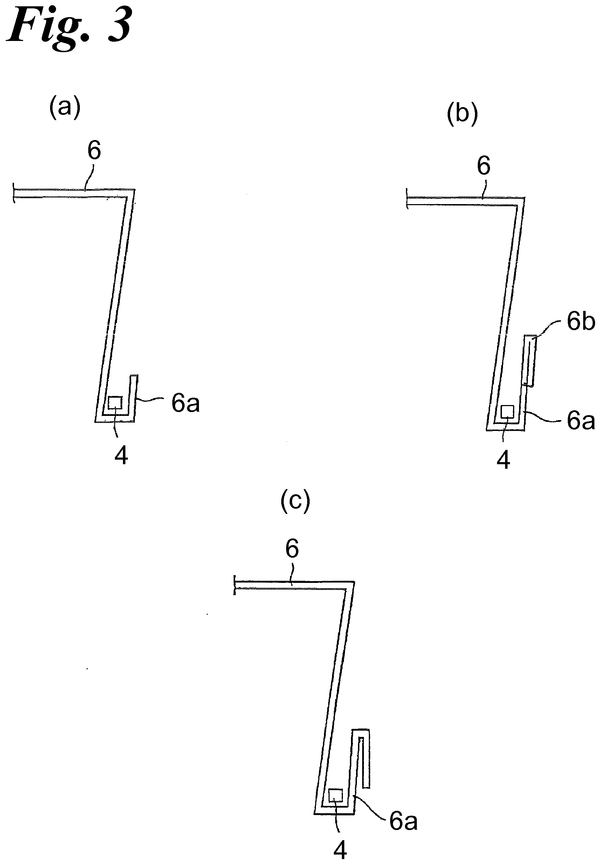

Folding of the carcass ply may assume a usual structure shown in FIG. 3 (a), and in addition thereto, the folding may be a structure in which a ply end 6b in a folding part 6a of the carcass ply 6 is covered separately, as shown in FIG. 3 (b), with a conductive rubber sheet and folded. Also, the folding may be, as shown in FIG. 3 (c), a structure in which the folding part 6a of the carcass ply 6 is further folded.

The pneumatic tire thus constituted according to the present invention comprises: a carcass composed of at least one carcass ply as a skeleton extending in a toroidal form across a pair of beads; at least one belt layer arranged at an outside of a crown part of the carcass in a tire radial direction; a tread part forming a grounding surface part which is provided at an outside of the belt layer described above in a tire radial direction; and an inner liner layer arranged at an inside of the carcass ply in a tire radial direction, and obtained is the pneumatic tire in which even when different kinds of rubbers are used on the upper and lower surfaces of a ply coating rubber, a stress applied to the tire a direction thereof during travelling of the car are not different on the upper and lower surfaces of the ply to bring about no distortion, so that separation and a distortion of a force applied to the adjacent members can be prevented, which is therefore excellent in durability and prevents accumulation of static electricity during travelling by the ply coating rubber constituted by the conductive rubber having the property described above, which inhibits the tire from rising in an electric resistance with the passage of time, and which is excellent in a reduction in a rolling resistance of the tire.

In the present invention, the tire can be inhibited from rising in an electric resistance, being reduced in a rolling resistance of the tire and rising in an electric resistance without making a sacrifice of a low loss property by arranging the low loss blend (that is, the non-conductive rubber) only on one surface and the conductive rubber on the remaining surface, increasing the gauge of the low loss blend and decreasing the gauge of the conductive blend in the ply coating rubber. If the conductive rubber is prepared simply by blending a large part of carbon black, the hardness, the viscosity and the scorch property are different on the upper and lower surfaces, and therefore the separation is liable to be caused. In the present invention, however, assumed is a constitution in which the carcass ply is prepared so that the physical properties other than conductivity are equal on the surface of the carcass ply at a tread side and the surface thereof at an inner liner side, whereby the hardness, the viscosity and the scorch property on the upper and lower surfaces can be adjusted, and separation can be inhibited and in which the tire can be inhibited from rising in an electric resistance without making a sacrifice of a low loss property by increasing the gauge of the non-conductive rubber of the low loss blend and decreasing the gauge of the conductive blend. In the present invention, the electric resistance is inhibited from rising by the conductive coating rubber, but the degree of contribution to the low loss performance given to the tire is proportional to a volume of the rubber, and therefore the gauge of the conductive blend is set in a range in which the gauge is decreased to the utmost, so that the loss is almost only the contribution of the low loss blend. Use of the ply coating rubber having the properties described above allows a balance between a low loss property and a low electric resistance of the tire to be compatible to a high extent to make it possible to prevent separation and a distortion of a force applied to the adjacent members, and therefore the pneumatic tire having an excellent durability is obtained.

Also, the present invention is characterized in that a non-conductive rubber layer having a low loss property can be blended with carbon black having a large particle size. Cases in which silica is blended in order to provide a rubber with a low loss property are known, however, it has been found that the rubber is more improved in a loss property and a crack extension resistance by using carbon black having a large particle size. Also, cases in which trouble on the production is caused due to a difference in a vulcanization characteristic in a case where carbon black is blended on one surface of the carcass ply and where silica is blended on the other surface are known.

The pneumatic tire thus constituted according to the present invention shall not be restricted to the respective embodiments described above, and the embodiment can be varied in various manners in a range in which the embodiment does not deviate from the scope of the present invention.

The pneumatic tire may be, for example, a pneumatic tire provided with a reinforcing rubber having an approximately crescent form at an inner surface side of the side wall part 2.

EXAMPLES

The present invention shall be explained below in further details with reference to examples and comparative examples, but the present invention shall not be restricted to the following examples.

(Production Examples A to E: production of ply coating rubbers)

Ply coating rubbers (conductive rubbers, non-conductive rubbers) were produced in blend compositions shown in the following Table 1 according to an ordinary method.

The ply coating rubbers (conductive rubbers, non-conductive rubbers) obtained in Examples A to E were used to measure and evaluate a low loss property (tan $\delta$), a storage elastic modulus (E'), a scorch property (10% vulcanization time: T0.1), a crack extension resistance and an electric resistance (volume specific resistance: $\Omega \cdot cm$) by the following respective methods.

The results thereof are shown in the following Table 1.

(Examples 1 to 5 and Comparative Examples 1 to 5: production of pneumatic tires)

The ply coating rubbers (conductive rubbers: A to D, non-conductive rubber: E) produced above in Production Examples A to E were used to prepare pneumatic tires from a carcass ply cord having the following constitution and the ply coating rubbers having blend compositions and constitutions shown in the following Table 2, to be specific, a carcass ply prepared by setting two kinds of the rubbers in a heating roll and subjecting rubbers to calendar is used to prepare pneumatic tires (test tires) of a size 195/65R 15 having the structure shown in FIG. 1, FIG. 2 and FIG. 3 (a).

(Carcass ply cord)

Cord angle: 90 degrees (assuming that a tire peripheral direction is 0 degree), a cord material: PET.

The test tires obtained in Examples 1 to 5 and Comparative Examples 1 to 5 described above were used to measure and evaluate durability (BF drum test), a low loss performance (RRC drum), an electric resistance ($\Omega \cdot$cm) and processability.

The results thereof are shown in the following Table 2.

[Evaluation method of a low loss property (tan $\delta$)]

A spectrometer (dynamic viscoelasticity analyzer) manufactured by Ueshima Seisakusho Co., Ltd. was used to measure tan $\delta$ at a frequency of 52 Hz, an initial distortion of 10%, a measuring temperature of 60°C and a dynamic distortion of 1%. It is shown that the larger the index value of tan $\delta$ is, the lower the heat generation is, and the smaller the hysteresis loss is.

[Evaluation method of a storage elastic modulus (E')]

The spectrometer (dynamic viscoelasticity analyzer) manufactured by Ueshima Seisakusho Co., Ltd. was used to measure a storage elastic modulus (E') at a frequency of 52 Hz, an initial distortion of 10%, a measuring temperature of 60°C and a dynamic distortion of 1%. It is shown that the larger the index value of E' is, the lower the elastic modulus is.

[Evaluation method of a scorch property (T0.1)]

Time (minute) required until 10% of a maximum value in a vulcanization torgue curve measured at a temperature of 105°C $\pm$ 1°C based on JIS K 6300-2: 2013 is obtained was measured. The degree of vulcanization rate T0.1 is an index showing a scorch resistance, and it is shown that the smaller the value is, the shorter the induction period required until beginning of a cross-linking reaction is, and the more easily, the scorch is caused (the scorch resistance is inferior).

(Evaluation method of a crack extension resistance)

A rubber vulcanized at 145°C for 30 minutes was used to prepare a rubber sample having a sample form of a dumbbell type, and the rubber sample was cracked in a length of 1 mm in a center and then subjected repeatedly to a fatigue test on the conditions of 100% fixed distortion, no initial distortion and 300 rpm by means of a repetitive fatigue tester to evaluate time required until the crack was grown and broken, and the time was shown by an index, wherein the value of the rubber prepared in Production Example D or E was set to 100. It is shown that the higher the numeral value is, the better the crack extension resistance is.

[Evaluation method of an electric resistance (volume specific resistance)]

A disc-shaped sample for a volume specific resistivity was prepared to measure an electric resistance R of a part having a radius: r = 2.5 cm and a thickness: t = 0.2 cm by means of an insulation resistance test box manufactured by ADVANCE Co., Ltd. to calculate a volume specific resistivity $\rho$ ($\Omega \cdot$cm) according to the following equation:

$$\rho = (a/t) \times R$$

wherein a represents a cross-sectional area (= $\pi \times r^2$), and t represents a thickness of the sample.

[Evaluation method of durability performance (BF drum test)]

A steel-made drum tester having a flat drum surface and a diameter of 1.707 m was used, and a peripheral temperature was controlled to 30 $\pm$ 3°C. A rim having a rim size determined in a JATMA standard was used to apply a double load of a maximum load capacity of the JATMA standard in an inner pressure of the JATMA standard to carry out durability drum running test, and a distance until the tire was broken was measured. The evaluation was shown by an index in Table 2, wherein the value obtained in Comparative Example 2 was set to 100. The larger the value is, the better durability performance (BF drum durability) in a usual inner pressure is.

[Evaluation method of a low loss performance (RRC drum):]

The tire charged with an inner pressure of 210 kPa was pressed onto a drum having a diameter of 1.7 m rotating at 60 km/h under a load of 4.9 N to measure a rolling resistance on the following test conditions, and the rolling resistance was shown by an index, wherein the reciprocal value of Comparative Example 2 was set to 100. It is shown that the larger the value is, the smaller the rolling resistance is, and the better the rolling performance is.

Indoor test conditions: tire size: PSR205/65R15, a rim width: 6.5J×15, inner pressure: 210 kPa and a load: 4.81 kN Actual car test conditions: a tire size: PSR205/65R15, a rim width: 6.5J×15, inner pressure: 210 kPa, a vehicle: CAMRY (displacement volume: 2000 cc) manufactured by Toyota Motor Corporation, a load: car weight + driver + front passenger seat 60 kgf.

[Evaluation method of an electric resistance]

A copper plate (width: 200 mm, length: 300 mm) was spread on a ground contact surface of the tire to measure an electric resistance between the copper plate on a tread contact surface and a rim flange at 100 V while applying a load of 300 kg. When the electric resistance exceeds $1 \times 10^{10}$ Ω·cm, the concern of problems such as radio noise is anticipated.

[Evaluation method of processability]

Processability was evaluated by observing visually scorch caused in producing the carcass ply. To be specific, when the rubber composition extruded in a thin sheet form on a sheet of aligned organic cords was rolled so that the cords were covered with the rubber composition, both surfaces of the rolled sheet (ply) were visually observed, that is, if the degree of the scorch was different on both surfaces of the ply to a large extent, the trouble that the rolling speed and the rolling temperature cannot be controlled to the optimum values was caused to exert adverse effects on processability, and therefore processability was evaluated according to the following criteria.

Evaluation criteria:

○: Scorch is not observed on both surfaces of the rolled sheet (ply), and processability is good.

Δ: Scorching is observed a little on a part of at least one surface of both surfaces of the rolled sheet (ply), and processability is influenced a little.

×: Scorch is observed on at least one surface of both surfaces of the rolled sheet (ply), and processability is inferior.

[Table 1]

| Production Example | A | B | C | D | E |
|---|---|---|---|---|---|
| NR *1 | 70 | 70 | 70 | 70 | 70 |
| SBR *2 | 30 | 30 | 30 | 30 | 30 |
| Carbon Black (GPF) *3 | 40 | 40 | 40 | | 45 |
| Carbon Black (HAF) *4 | | | 20 | 45 | |
| Carbon Black (CNT) *5 | 3 | | | | |
| Carbon Black (Ketjen) *6 | | 5 | | | |
| Oil *7 | | | | 10 | |
| Sulfur | 3 | 3 | 3 | 3 | 3 |
| Vulcanization accelerator A *8 | 1 | 1 | 1 | 1 | 1 |
| Vulcanization accelerator B *9 | 0.8 | 0.8 | 0.8 | 0.8 | 0.8 |
| Zinc oxide | 5 | 5 | 5 | 5 | 5 |
| Low-loss property (tan δ) | 0.11 | 0.12 | 0.13 | 0.17 | 0.1 |
| Storage modulus (E') | 5.3 | 5.5 | 7 | 6 | 5 |
| Tensile stress (M300) | 10 | 10 | 15 | 12 | 12 |

(continued)

| Production Example | A | B | C | D | E |
|---|---|---|---|---|---|
| Scorch property (T0.1) | 10.5 | 10.5 | 6 | 11 | 10 |
| Crack growth resistance | 110 | 110 | 98 | 100 | 100 |
| Electrical resistance ($\Omega \cdot$cm) | $1\times10^9$ | $1\times10^9$ | $1\times10^{10}$ | $1\times10^9$ | $1\times10^{14}$ |

The terms *1 to *9 in Table 1 show the followings.

*1: RSS#3
*2: SBR, manufactured by JSR Corporation
*3: Nitrogen adsorption specific surface area ($N_2$SA: 35 m$^2$/g), N660, manufactured by Asahi Carbon Co., Ltd.
*4: Nitrogen adsorption specific surface area ($N_2$SA: 78 m$^2$/g), N330, manufactured by Asahi Carbon Co., Ltd.
*5: Carbon nanotube (CNT)
*6: Nitrogen adsorption specific surface area ($N_2$SA: 800 m$^2$/g), Ketjen Black EC300J, manufactured by Lion Corporation
*7: Process oil (TDAE), manufactured by Nippon Petrochemicals Co., Ltd.
*8: MBTS (di-2-benzothiazolyl disulfide)
*9: BBS (N-tert-butyl-2-benzothiazolesulfenamide)

[Table 2]

| | Example | | Comparative Example |
|---|---|---|---|
| | 1 | 2 | 1 |
| Type of electric conductive rubber (T1) | A | B | C |
| Type of electric non-conductive rubber (T2) | E | E | E |
| T1+T2 | 1.0 | 1.0 | 1.0 |
| T1/T2 | 0.66 | 0.66 | 0.18 |
| (T1×tanD1)/(T2×tanD2) | 0.73 | 0.80 | 0.87 |
| E'1/E'2 | 1.06 | 1.1 | 1.4 |
| T0.1(electric conductive rubber)/ T0.1(electric non-conductive rubber) | 1.05 | 1.05 | 0.6 |
| Durability (BF drum) | 105 | 105 | 96 |
| Low-loss property (RRC drum) | 95 | 96 | 93 |
| Electric resistance ($\Omega \cdot$cm) | $1\times10^5$ | $1\times10^5$ | $1\times10^9$ |
| Processability | ○ | ○ | × |

[Table 2] (continued)

| | Example | | | Comparative Example | | | |
|---|---|---|---|---|---|---|---|
| | 3 | 4 | 5 | 2 | 3 | 4 | 5 |
| Type of electric conductive rubber (T1) | D | A | A | D | A | A | E |
| Type of electric non-conductive rubber (T2) | E | E | E | D | E | E | E |
| T1+T2 | 1.0 | 1.0 | 1.0 | 1.0 | 1.0 | 1.0 | 1.0 |
| T1/T2 | 0.66 | 0.38 | 0.81 | 1 | 0.18 | 1 | 1 |
| (T1×tanD1)/(T2×tanD2) | 1.13 | 0.42 | 0.90 | 1 | 0.19 | 1.1 | 1 |
| E'1/E'2 | 1.2 | 1.06 | 1.06 | 1 | 1.06 | 1.06 | 1 |
| T0.1(electric conductive rubber)/ T0.1(electric non-conductive rubber) | 1.1 | 1.05 | 1.05 | 1 | 1.05 | 1.05 | 1 |
| Durability (BF drum) | 100 | 106 | 104 | 100 | 105 | 105 | 100 |
| Low-loss property (RRC drum) | 98 | 94 | 96 | 100 | 93 | 100 | 93 |
| Electric resistance ($\Omega\cdot$cm) | $1\times10^5$ | $1\times10^6$ | $1\times10^5$ | $1\times10^7$ | $1\times10^9$ | $1\times10^6$ | $1\times10^{10}$ |
| Processability | △ | ○ | ○ | △ | ○ | ○ | △ |

As apparent from the results shown in Table 1 and Table 2 described above, it has become clear from the evaluation results of durability performance (BF drum test), the low loss performance (RRC drum), the electric resistance, processability that the pneumatic tires prepared in Examples 1 to 5 in the scope of the present invention are pneumatic tires which prevent accumulation of static electricity during travelling, which inhibit the tire from rising in an electric resistance with the passage of time, and which are reduced in a rolling resistance of the tire and excellent in durability and processability as compared with the pneumatic tires prepared in Comparative Examples 1 to 5 out of scope of the present invention.

Observing individually comparative examples, pneumatic tires prepared in Comparative Examples 1, 3 and 4 comprise the carcass ply prepared by using the conductive rubber and the non-conductive rubber for the ply coating rubber (provided that the range of T1/T2 is out of scope of the present invention), and both pneumatic tires prepared in Comparative Examples 2 and 5 comprise the carcass ply having a single layer structure, wherein the conductive rubber was used in Comparative Example 2, and the non-conductive rubber was used in Comparative Example 5. It has been confirmed that in the case of comparative examples out of scope of the present invention, pneumatic tires satisfying all of an inhibition in a rise of an electric resistance, a reduction in a rolling resistance of the tire, durability and processability are not obtained.

INDUSTRIAL APPLICABILITY

A pneumatic tire suited to tires for passenger cars is obtained since the pneumatic tire is prevented from accumulation of static electricity during travelling, inhibited from rising in an electric resistance with the passage of time, and is reduced in a rolling resistance of the tire and excellent in durability.

Numerals and Letters

1: Tread part
2: Side wall part
3: Bead part
4: Bead core
5: Main body part
6: Carcass ply
7: Belt layer
8: Rim
9: Inner liner layer
10: Pneumatic tire
16: Conductive ply coating rubber
17: Non-conductive ply coating rubber

**Claims**

1. A pneumatic tire comprises:

   a carcass composed of at least one carcass ply as a skeleton extending in a toroidal form across a pair of beads;
   at least one belt layer arranged at an outside of a crown part of the carcass in a tire radial direction;
   a tread part forming a grounding surface part which is provided at an outside of the belt layer in a tire radial direction; and
   an inner liner layer arranged at an inside of the carcass ply in a tire radial direction,
   wherein a conductive rubber is arranged for a ply coating rubber of one surface, and a non-conductive rubber is arranged for the ply coating rubber of the other surface;
   assuming that the respective thicknesses thereof are T1 and T2, the carcass ply has a ply in which T1/T2 is $0.2 \leq T1/T2 \leq 0.9$; and
   the conductive ply coating rubber is arranged at a tread side, and the non-conductive ply coating rubber is arranged at an inner liner side.

2. The pneumatic tire as described in claim 1, wherein the conductive ply coating rubber contains a conductive material.

3. The pneumatic tire as described in claim 1 or 2, wherein the non-conductive ply coating rubber contains carbon black having a nitrogen adsorption specific surface area ($N_2SA$) of 30 to 40 $m^2/g$.

4. The pneumatic tire as described in any one of claims 1 to 3, wherein assuming that the loss tangents of the ply coating rubbers at 60°C are tan D1 and tan D2 respectively, the loss tangents satisfy tan D1 $\geq$ tan D2.

5. The pneumatic tire as described in any one of claims 1 to 4, wherein $(T1 \times \tan D1)/(T2 \times \tan D2)$ in the respective thicknesses T1 and T2 and the loss tangents tan D1 and tan D2 of the ply coating rubbers satisfy $0.2 \leq (T1 \times \tan D1)/(T2 \times \tan D2) \leq 1.2$.

6. The pneumatic tire as described in any one of claims 1 to 5, wherein assuming that the storage elastic moduli of the ply coating rubbers at 60°C are E1 and E2 respectively, E1/E2 satisfies $1.0 \leq E1/E2 \leq 1.5$.

7. The pneumatic tire as described in any one of claims 1 to 6, wherein the sum T1 + T2 of the respective thicknesses T1 and T2 of the ply coating rubbers satisfies $0.9 \leq T1 + T2 \leq 1.4$.

8. The pneumatic tire as described in any one of claims 1 to 7, wherein the kinds of a cross-linking agent and a vulcanization accelerator contained in the conductive rubber and the non-conductive rubber are the same.

9. The pneumatic tire as described in any one of claims 1 to 8, wherein assuming that the 10% vulcanization times (T0.1) of the conductive rubber and the non-conductive rubber are s1 and s2 respectively, s1/s2 satisfies $0.9 \leq s1/s2 \leq 1.1$.

10. A production method for a ply comprising a step of arranging a conductive rubber containing a conductive material on the ply coating rubber of one surface and a non-conductive rubber containing carbon black having a nitrogen adsorption specific surface area ($N_2SA$) of 30 to 40 $m^2/g$ on the ply coating rubber of the other surface to coat the upper and lower surfaces at the same time.

11. The production method for the ply as described in claim 10, wherein the kinds of a cross-linking agent and a vulcanization accelerator contained in the conductive rubber and the non-conductive rubber are the same.

12. A production method for a pneumatic tire comprising a step of using the ply produced by the method as described in claim 10 or 11 to arrange the conductive ply coating rubber at a tread side, and the non-conductive ply coating rubber at an inner liner side.

# *Fig. 1*

## *Fig. 2*

# Fig. 3

(a)

(b)

(c)

## INTERNATIONAL SEARCH REPORT

| | International application No. |
|---|---|
| | PCT/JP2017/018807 |

**A. CLASSIFICATION OF SUBJECT MATTER**
*B60C19/08*(2006.01)i, *B60C9/04*(2006.01)i

According to International Patent Classification (IPC) or to both national classification and IPC

**B. FIELDS SEARCHED**

Minimum documentation searched (classification system followed by classification symbols)
B60C19/08, B60C1/00, B60C9/02-9/17

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2013-49382 A  (Toyo Tire and Rubber Co., Ltd.),<br>14 March 2013 (14.03.2013),<br>claims; paragraphs [0031] to [0033], [0047]; drawings<br>(Family: none) | 1,2,7-9<br>3-6,10-12 |
| A | JP 2014-218096 A  (Sumitomo Rubber Industries, Ltd.),<br>20 November 2014 (20.11.2014),<br>paragraph [0072]<br>& US 2014/0326386 A1<br>paragraph [0082]<br>& EP 2799247 A2          & CN 104129232 A | 7 |

☒  Further documents are listed in the continuation of Box C.          ☐  See patent family annex.

| | |
|---|---|
| *    Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 18 July 2017 (18.07.17) | 01 August 2017 (01.08.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2017/018807

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-131100 A (Toyo Tire and Rubber Co., Ltd.), 12 July 2012 (12.07.2012), claims; drawings & US 2012/0152418 A1 claims; figures & EP 2468490 A1 & CN 102529135 A | 1-12 |
| A | WO 2008/044288 A1 (Toyo Tire and Rubber Co., Ltd.), 17 April 2008 (17.04.2008), claims; drawings & US 2010/0078102 A1 claims; figures & CN 101535064 A | 1-12 |
| A | WO 2008/044289 A1 (Toyo Tire and Rubber Co., Ltd.), 17 April 2008 (17.04.2008), claims; drawings & US 2010/0078103 A1 claims; figures & CN 101535065 A | 1-12 |
| A | JP 2011-517640 A (Societe de Technologie Michelin), 16 June 2011 (16.06.2011), claims; drawings & US 2011/0259489 A1 claims; figures & WO 2009/127323 A1 & EP 2268478 A1 & CN 10206989 A | 1-12 |
| A | JP 2011-525453 A (Societe de Technologie Michelin), 22 September 2011 (22.09.2011), claims; drawings & US 2011/0174420 A1 claims; figures & WO 2009/156344 A1 & EP 2303607 A1 & CN 102066138 A | 1-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013086568 A